(19) Europäisches Patentamt
European Patent Office
Office européen des brevets

(11) **EP 3 364 167 B1**

(12) **EUROPEAN PATENT SPECIFICATION**

(45) Date of publication and mention
of the grant of the patent:
**25.12.2019 Bulletin 2019/52**

(51) Int Cl.:
*G01L 19/00* (2006.01)   *G01K 7/42* (2006.01)
*G01L 19/14* (2006.01)   *G01K 3/14* (2006.01)

(21) Application number: **17202094.3**

(22) Date of filing: **16.11.2017**

(54) **SENSOR DEVICE**

SENSORVORRICHTUNG

DISPOSITIF DE CAPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2017   JP 2017025875**

(43) Date of publication of application:
**22.08.2018 Bulletin 2018/34**

(73) Proprietor: **Omron Corporation
Kyoto-shi, Kyoto 600-8530 (JP)**

(72) Inventor: **TASAKI, Hiroshi
Koyto-shi, Kyoto 600-8530 (JP)**

(74) Representative: **Becker Kurig Straus
Patentanwälte
Bavariastrasse 7
80336 München (DE)**

(56) References cited:
**WO-A1-2015/099933     DE-A1-102004 053 884
US-A1- 2002 189 363     US-A1- 2009 235 752**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a sensor device or the like that detects a pressure and temperature of a fluid.

Description of Related Art

There has been a need to detect a pressure applied to a detection target (e.g., a fluid such as water, oil, etc., air, or the like) and a temperature of the detection target using one sensor device since the past. In response to this, various sensor devices by which a pressure and a temperature can be detected have recently been developed (Patent Documents 1 to 4).

Patent Document 5 discloses a a measurement device for fixing to a pipe or a vessel containing a fluid, the device comprising a pressure sensor surrounded by a wall. The device includes a coating adhering to said wall and suitable for isolating the fluid sensor.

Patent Document 6 discloses a temperature sensor assembly for use with a process vessel wall including a base structure, a first temperature sensor, a second temperature sensor, and a processor. The base structure forms a contact area with an external surface of the process vessel wall.

Patent Document 7 discloses a temperature compensated pressure sensor having two separated linear temperature sensors, one of which measures the pressure cell temperature and is used with the pressure measurement to produce an intermediate signal and the second measures the process connection temperature to correct this.

[Prior Art Document]

[Patent Documents]

[Patent Document 1] Japanese Unexamined Patent Application Publication No. 2011-033531 (published on February 17, 2011)
[Patent Document 2] Japanese Unexamined Patent Application Publication No. 2009-281915 (published on December 03, 2009)
[Patent Document 3] Japanese Unexamined Patent Application Publication No. 2011-202960 (published on October 13, 2011)
[Patent Document 4] Japanese Unexamined Patent Application Publication No. 2014-122811 (published on July 03, 2014)
[Patent Document 5] US 2002/189363 A1
[Patent Document 6] WO 2015/099933 A1

[Patent Document 7] DE 10 2004 053884 A1

SUMMARY OF THE INVENTION

In the related arts described in Patent Documents 1 to 4, a temperature sensor is provided for a protrusion of a housing as a probe. This is to avoid the influence of temperatures other than the temperature of the detection target at the time of the temperature detection of the temperature sensor.

However, when the temperature sensor is configured to protrude with respect to the detection target, since dirt or dust accumulates on the protrusion portion, there is a demerit of serviceability being reduced. In addition, there is a demerit of a pressure loss of the fluid occurring in front of and behind the protrusion portion. For example, when the detection target is a fluid, clogging or the like of a pipe may be caused by the pressure loss.

Meanwhile, when the temperature sensor is disposed apart from the protrusion portion to overcome these demerits, since the temperature sensor is affected by the temperature at the time of the temperature detection, the temperature of the detection target cannot be accurately detected.

The present invention is provided by appended claim 1. Beneficial embodiments are provided in the dependent claims. The following disclosure serves a better understanding of the invention and was made in view of the above problems. The present disclosure is directed to realizing a sensor device or the like capable of accurately calculating a temperature of a fluid and simplifying a shape of a housing.

To solve the above problems, a sensor device according to the present disclosure is a sensor device having a pressure sensor for detecting a of a fluid, the pressure sensor is provided in a housing of the sensor device such that a pressure detection element is exposed to the detection target. The sensor device includes a first temperature sensor provided in the housing and configured to detect a temperature conducted from the fluid via the housing or the pressure sensor; a second temperature sensor provided at a position that is more distant from the fluid than the first temperature sensor and provided on the housing; and a temperature calculator configured to calculate a temperature of the fluid from a temperature detected by the first temperature sensor and a temperature detected by the second temperature sensor.

The temperature sensors are affected by an air temperature in the event of temperature detection. For this reason, in the related art, the temperature sensors were disposed at positions that are not easily affected by a temperature, and accuracy of the detected temperature was secured. For example, in the related art, the temperature sensors were provided as probes protruding to the fluid.

On the other hand, according to the above configuration, the temperature of the fluid is calculated using two temperatures detected by two temperature sensors that are the first temperature sensor and the second temperature sensor. For this reason, the temperature of the fluid can be accurately calculated. Since calculation accuracy of the temperature of the fluid is enhanced using the two temperatures, it is not necessary to dispose the first temperature sensor on the aforementioned probe in the sensor device. Therefore, according to the above configuration, the temperature of the detection target can be accurately calculated, and a shape of the housing of the sensor device can be simplified.

In the sensor device, the first temperature sensor may be disposed to contact with the pressure sensor in the housing. In this way, since the first temperature sensor is disposed adjacent to the pressure sensor, the shape of the housing can be made smaller and simpler.

In the sensor device, the first temperature sensor may be disposed on a surface opposite to a detection surface of the pressure detection element. Thereby, the first temperature sensor can detect a temperature conducted from the pressure detection element that is in direct contact with the fluid. For this reason, the first temperature sensor can detect a temperature closer to an actual temperature of the detection target. Therefore, the sensor device can more accurately calculate the temperature of the fluid.

In the sensor device, the second temperature sensor may be provided inside a portion of the housing which is not in contact with the fluid. Thereby, the second temperature sensor is provided at a position at which it is difficult to receive propagation of the temperature from the fluid during temperature detection. Therefore, the second temperature sensor can accurately calculate the temperature. The sensor device can calculate the temperature of the fluid from the more accurately detected temperature and the detected temperature of the first temperature sensor. Therefore, the sensor device can more accurately calculate the temperature of the fluid.

In the sensor device, the housing may have a shape of a column or a prism, and a portion thereof including a bottom may be in contact with the fluid. The pressure sensor may be disposed such that the pressure detection element is exposed to the fluid from the bottom of the housing.

In this way, the housing and the pressure sensor of the sensor device are shaped not to obstruct movement of the fluid as much as possible, and thereby a loss of the pressure of the fluid can be suppressed. Therefore, the sensor device can suppress a bad influence on the fluid and its surrounding facility due to installation of the sensor device.

According to the present disclosure, a temperature of a fluid can be accurately calculated, and a shape of a housing can be simplified.

BRIEF DESCRIPTION OF THE DRAWINGS

Fig. 1 is a block diagram illustrating a configuration of main parts of a sensor device according to a first embodiment of the present invention.
Fig. 2 is a diagram illustrating an example of external appearance of the sensor device.
Fig. 3(a) is a diagram illustrating an example of a method of assembling a connecting part of the sensor device and a pressure sensor and a first temperature sensor included in the sensor device, Fig. 3(b) is a sectional diagram of a state in which the connecting part, the pressure sensor, and the first temperature sensors are assembled, and Figs. 3(c) and 3(d) are diagrams illustrating an example of a layout of the first temperature sensor with respect to the pressure sensor.
Fig. 4 is a schematic diagram illustrating a positional relation among the pressure sensor, the first temperature sensor, and the second temperature sensor.
Fig. 5 is a graph illustrating a change in detected temperature of the first temperature sensor which corresponds to a temperature difference between a detection target and an external temperature.
Fig. 6 is a flow chart illustrating a flow of a process concerning calculation of a temperature of the detection target.
Fig. 7 is a graph illustrating a layout position of a first temperature sensor of a sensor device according to a second embodiment and a value of a temperature of a detection target, and a value of a detected temperature of the first temperature sensor.

DESCRIPTION OF THE EMBODIMENTS

A sensor device according to the present disclosure is a sensor device that detects a pressure applied to a fluid and a temperature of the fluid. The detection target may be any one of a liquid, and a gas.

The sensor device according to the present disclosure is characterized by including a pressure sensor and a plurality of temperature sensors and by calculating the temperature of the detection target from detected temperatures of the plurality of temperature sensors. In addition, the sensor device according to the present disclosure is characterized by contriving a layout of each temperature sensor. Hereinafter, embodiments will be given as examples, and a configuration and function of each member of the sensor device according to the present disclosure will be described.

[First embodiment]

«Exterior of the sensor device 1»

Hereinafter, a first embodiment of the present disclosure will be described. A shape of the exterior of the sensor device 1 according to the present embodiment will be described first. In the present embodiment, a case in which the detection target is a fluid such as water or oil flowing along a pipe will be described as an example.

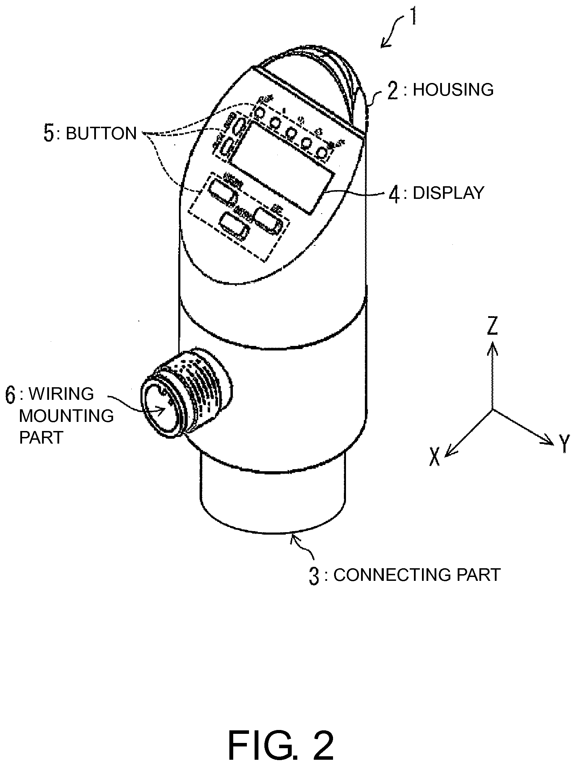

Fig. 2 is a diagram illustrating an example of the exterior of the sensor device 1. A housing 2 of the sensor device 1 has, for instance, the shape of a column or a prism. To be more specific, the housing 2 preferably has a shape in which one side of the column (or the prism) in a longitudinal direction is cut at an angle with respect to the longitudinal direction. Hereinafter, as illustrated, the longitudinal direction of the housing 2 is defined as a z-axial direction, and a plane perpendicular to the z-axial direction is defined as an xy plane. An upper surface of the housing 2 in the z-axial direction is referred to as a "top," and a lower surface of the housing 2 in the z-axial direction is referred to as a "bottom." The other surface is referred to as a "lateral surface."

A connecting part 3 is provided at a portion including the bottom of the housing 2. The connecting part 3 includes a tank or a pipe in which the fluid is filled, or a jig for mounting the housing 2 on the detection target itself. The connecting part 3 fixes the housing such that the portion including the bottom of the housing 2 comes into contact with the detection target.

As illustrated, a display 4 for displaying detected results of the sensor device 1, and buttons 5 for inputting instructions to the sensor device 1 may be provided on the top of the housing 2. A wiring mounting part 6 on which a cable or the like used for communication of a communication unit 40 (to be described below) can be mounted may be provided on the lateral surface of the housing 2. The housing 2 may include a display lamp or a switch (not illustrated).

«Configuration of main parts»

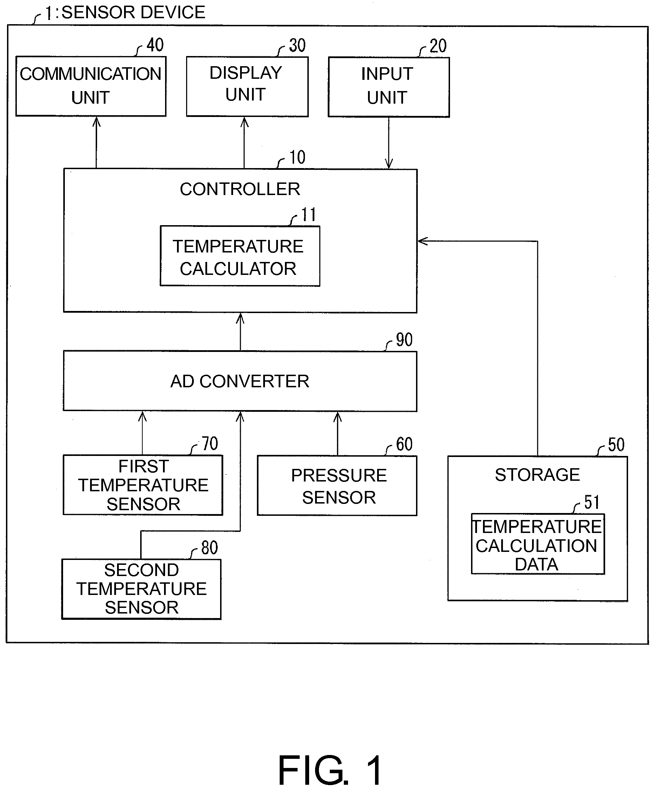

Fig. 1 is a block diagram illustrating a configuration of main parts of the sensor device 1. The sensor device 1 at least includes a pressure sensor 60, a first temperature sensor 70, a second temperature sensor 80, an AD converter 90, a controller 10, and a storage 50. Further, the sensor device 1 may include an input unit 20, a display unit 30, and a communication unit 40.

The pressure sensor 60 detects the pressure of the fluid. The pressure sensor 60 sends the detected pressure to the AD converter 90 as an electric signal. A method of detecting the pressure of the pressure sensor 60 may be appropriately selected depending on the nature of the fluid. For example, the pressure sensor 60 may be a piezoelectric pressure sensor.

A structure and a detecting method of the pressure sensor 60 are preferably determined in consideration of a range (from a maximum to a minimum) of a pressure that can be applied to the fluid For example, when the pressure sensor 60 detects a pressure from a press machine during forging, a hydraulic pressure of a rolling press, a clamp pressure and bite feed pressure of a finishing machine, a pump pressure of a washing machine, or the like, the pressure sensor 60 can preferably detect a maximum pressure of 40 MPa or so.

Each of the first temperature sensor 70 and the second temperature sensor 80 detects a temperature. The first temperature sensor 70 is a temperature sensor for detecting the temperature of the fluid which is conducted from the housing 2 or the pressure sensor 60. On the other hand, the second temperature sensor 80 is a sensor provided to measure the influence of an air temperature during the temperature detection of the first temperature sensor 70.

The first temperature sensor 70 and the second temperature sensor 80 are provided at different positions in the housing 2. A positional relation between the first temperature sensor 70 and the second temperature sensor 80 will be described below in detail. A method for the temperature detection of the first temperature sensor 70 and the second temperature sensor 80 may be any conventional method. The first temperature sensor 70 and the second temperature sensor 80 send the detected temperature to the AD converter 90 as an electric signal.

The AD converter 90 numerically converts the pressure indicated by the electric signal received from the pressure sensor 60. For example, when the pressure sensor 60 is the aforementioned piezoelectric pressure sensor, the AD converter 90 numerically converts the pressure from a change in electric resistance indicated by the electric signal. The AD converter 90 numerically converts the temperatures indicated by the electric signal received from the first temperature sensor 70 and the second temperature sensor 80. The sensor device 1 may separately include the AD converter 90 that numerically converts the pressure and the AD converter 90 that numerically converts the temperature. In addition, the sensor device 1 may perform the numerical conversion of the pressure at the pressure sensor 60 and the numerical conversion of the temperatures at the first and second temperature sensors 70 and 80 without the AD converter 90.

The controller 10 collectively controls the sensor device 1. The controller 10 receives values of the pressure and the temperature from the AD converter 90. The controller 10 includes a temperature calculator 11. The temperature calculator 11 calculates the temperature of the fluid according to the value of the temperature detected by the first temperature sensor 70 and the value of the temperature detected by the second temperature sensor 80. A specific calculating method of the detection target will be described below in detail. The controller 10 may correct the numerical value of the pressure received from the AD converter 90 with a preset correction value such as a numerical value stored in the storage 50, and calculate a more accurate pressure value.

The storage 50 stores data used by the sensor device 1. For example, the storage 50 stores temperature calculation data 51 obtained by mapping the temperature of the detection target to a combination of the value of the detected temperature of the first temperature sensor 70 and the value of the detected temperature of the second temperature sensor 80. The temperature calculation data 51 may divide the value of the detected temperature of the first temperature sensor 70 and the value of the detected temperature of the second temperature sensor 80 by a predetermined range, and bind the temperature of the detection target corresponding to each numerical value range.

The input unit 20 receives an input operation of a user for the sensor device 1. The input unit 20 is realized by physical buttons such as, for instance, the buttons 5 illustrated in Fig. 2 or a touch panel. The display unit 30 displays a temperature and a pressure. The display unit 30 is a display device such as, for instance, the display 4 illustrated in Fig. 2.

The communication unit 40 receives the temperature and pressure calculated by the temperature calculator 11 from the controller 10, and transmits them to an external device such as a programmable logic controller (PLC) or a personal computer (PC). The communication unit 40 may receive a control instruction of the sensor device 1 from the external device, and transmit it to the controller 10. A communication mode of the communication unit 40 is not limited. The communication mode may be, for instance, wired connection using the cable mounted on the wiring mounting part 6 illustrated in Fig. 2, or wireless connection.

«Layout of the temperature sensors»

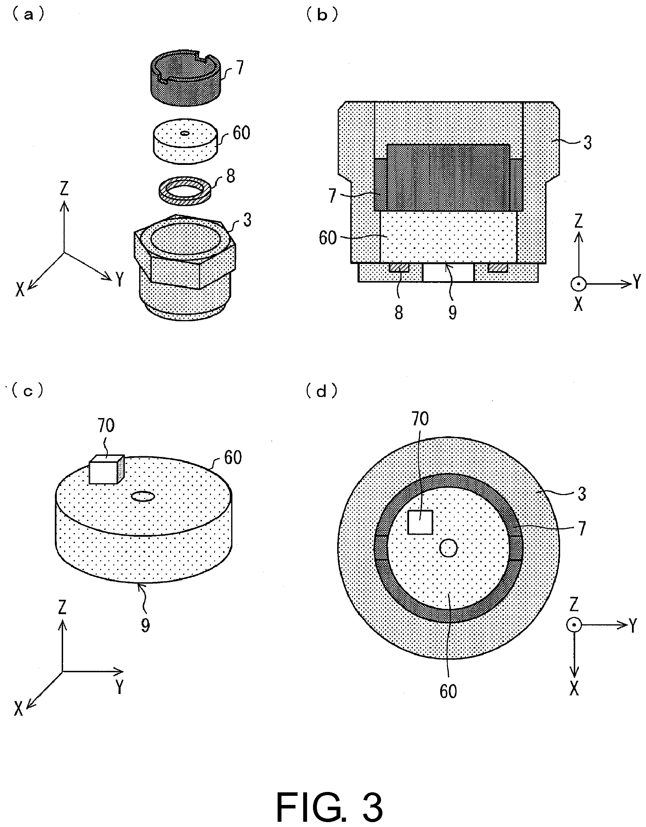

Figs. 3(a) and 3(b) are diagrams illustrating an example of a layout of the pressure sensor 60 in the sensor device 1. Figs. 3(c) and 3(d) are diagrams illustrating an example of a layout of the first temperature sensor 70 with respect to the pressure sensor 60.

As illustrated in Figs. 3(a) and 3(b), the pressure sensor 60 is fixed to be embedded in the connecting part 3 using, for instance, fixing components 7 and 8. At this time, the pressure sensor 60 is disposed such that a detection surface 9 of an element for pressure detection (a pressure detection element) is exposed to the fluid from the bottom of the housing 2.

As illustrated in Figs. 3(c) and 3(d), the first temperature sensor 70 is preferably disposed on the pressure sensor 60 in the z-axial direction in contact with the pressure sensor 60. To be specific, the first temperature sensor 70 is preferably disposed in the housing 2 and on a surface opposite to the detection surface 9 of the pressure detection element of the pressure sensor 60. Thereby, the first temperature sensor 70 can detect a temperature conducted from the pressure detection element that is in direct contact with the detection target. That is, the first temperature sensor 70 can detect a temperature closer to an actual temperature of the fluid.

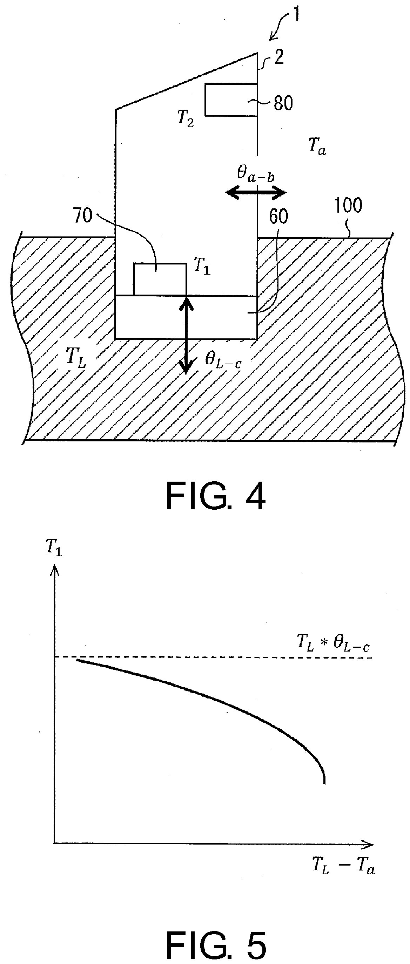

Fig. 4 is a schematic diagram illustrating positional relations among the pressure sensor 60, the first temperature sensor 70, and the second temperature sensor 80. An oblique line portion in the figure indicates a fluid flowing along a pipe 100. The same figure is realized without physical configurations of the connecting part 3, the wiring mounting part 6, etc. In the same figure and the following description, an air temperature (an external temperature) outside the housing 2 is defined as $T_a$, the temperature of the detection target as $T_L$, the detected temperature of the first temperature sensor 70 as $T_1$, and the detected temperature of the second temperature sensor 80 as $T_2$. Conductivity when the external temperature is conducted to the second temperature sensor 80 is defined as $\theta_{a-b}$, and conductivity when the detected temperature is conducted to the first temperature sensor 70 is defined as $\theta_{L-c}$.

In the schematic diagram of Fig. 4, the first temperature sensor 70 is disposed on the surface opposite to the detection surface 9 of the pressure detection element of the pressure sensor 60 as illustrated in Figs. 3(c) and 3(d). Meanwhile, the second temperature sensor 80 is provided at a position that is more distant from the fluid than the first temperature sensor 70. The second temperature sensor 80 is preferably provided at a position at which the temperature of the fluid is propagated as little as possible. According to the invention, the second temperature sensor 80 is provided inside a portion of the housing 2 which is not in contact with the fluid.

«Method of calculating fluid temperature»

The temperature calculator 11 of the sensor device 1 according to the present embodiment calculates the temperature of the detection target from the value of the detected temperature of the first temperature sensor 70 and the value of the detected temperature of the second temperature sensor 80. Hereinafter, a process concerning the calculation of the temperature of the fluid which is performed by the temperature calculator 11 will be described using Figs. 4 and 5.

The pipe 100 illustrated in Fig. 4 is a facility pipe, and has a thickness of several millimeters or so. Therefore, if the second temperature sensor 80 is disposed as described above, heat of the fluid and the pipe 100 hardly affects the temperature detection of the second temperature sensor 80. When a variable of each temperature illustrated in Fig. 4 is used, a relation between the detected temperature $T_2$ of the second temperature sensor 80 and the external temperature $T_a$ can be modeled as in formula 1 below.

Meanwhile, the first temperature sensor 70 is affected by the internal temperature of the housing 2 when the temperature of the fluid conducted from the housing 2 or the pressure sensor 60 is detected. Since the internal temperature of the housing 2 varies depending on the external temperature, the first temperature sensor 70 is said to receive the influence of the external temperature. A relation among the detected temperature $T_1$ of the first temperature sensor 70, the temperature $T_L$ of the detection target, and the external temperature $T_a$ can be modeled as in formula 2 below.

$$T_2 = T_a \times \theta_{a-b} + \varepsilon \quad \cdots\cdots\cdots (1)$$

$$T_1 = T_L \times \theta_{L-c} + f(T_L - T_a) + \varepsilon \quad \cdots\cdots\cdots (2)$$

Here, $\theta_{a-b}$ and $\theta_{L-c}$ are conductivities, and are constants that are preset from a material of the housing 2 or the pressure sensor 60 that is in contact with the first temperature sensor 70. In addition, $f(T_L - T_a)$ is a value obtained when a temperature difference $T_L - T_a$ between the fluid and the external temperature is substituted for a preset function $f()$. The function $f()$ is a function that is preset according to a structure and material of the sensor device 1, and is stored in the storage 50. In addition, $\varepsilon$ is a numerical value that is adequately set for each formula and is intended for error correction.

Fig. 5 is a graph illustrating a change in the detected temperature of the first temperature sensor 70 which corresponds to the temperature difference between the detection target and the external temperature. A solid line in the figure indicates transition of the value of formula 2 corresponding to the temperature difference between the fluid and the external temperature. In addition, a dotted line is a line along which a value of $T_1$ is extended when there is no temperature difference between the detection target and the external temperature $((T_L - T_a) = 0)$.

As illustrated, when the temperature difference between the fluid and the external temperature occurs $((T_L - T_a) > 0)$, the first temperature sensor 70 is affected by the temperature in the event of the temperature detection, and thus the value calculated from formula 2 is reduced. A rate of this reduction is increased as the difference between the temperature of the fluid and the external temperature increases.

In the sensor device 1 according to the present embodiment, when the temperature calculator 11 receives numerical values indicating $T_1$ and $T_2$, a value of $T_L$ corresponding to a combination of the values indicating $T_1$ and $T_2$ is specified with reference to the temperature calculation data 51 of the storage 50, and thereby $T_L$ is calculated.

«Flow of the process»

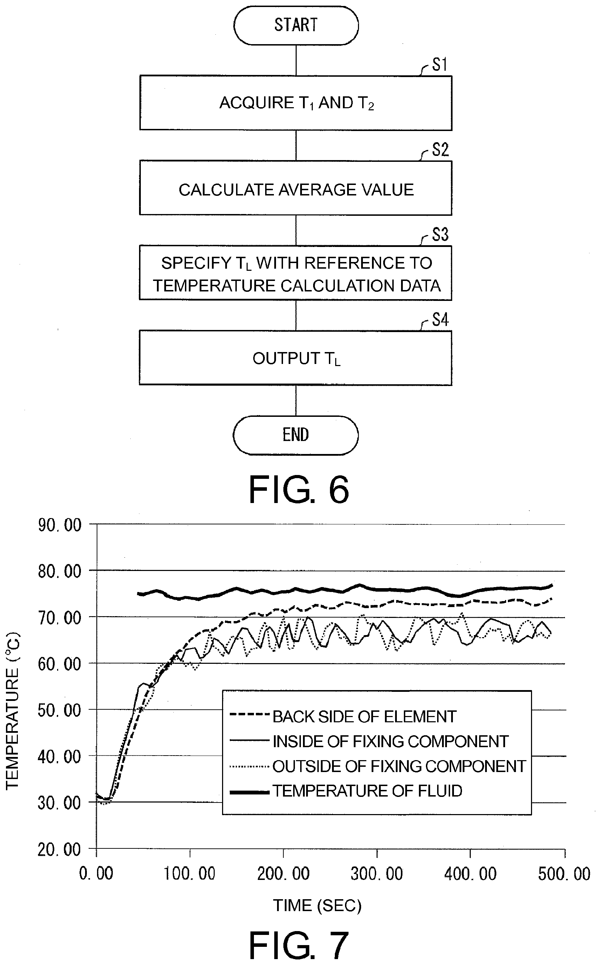

Fig. 6 is a flow chart illustrating a flow of a process concerning the calculation of the temperature of the fluid which is performed by the controller 10. The controller 10 acquires the numerical values of $T_1$ and $T_2$ from the AD converter 90 at a predetermined time interval (S1). The temperature calculator 11 of the controller 10 calculates an average value of the acquired $T_1$ and $T_2$ in a predetermined time (S2). When $T_1$ and $T_2$ are acquired once, the process of S2 may not be performed.

Next, the temperature calculator 11 specifies the temperature of the fluid corresponding to the value of $T_2$ with reference to the temperature calculation data 51 stored in the storage 50 (S3). Finally, the controller 10 outputs $T_L$ calculated by the temperature calculator 11 to the external device via the communication unit 40 (S4). Otherwise the controller 10 outputs $T_L$ to the display unit 30 (S4).

According to the above configuration and process procedure, the temperature of the fluid is calculated from the temperature detected by the first temperature sensor 70 and the temperature detected by the second temperature sensor 80, and thereby the temperature of the fluid can be accurately calculated. For this reason, the first temperature sensor 70 of the sensor device 1 may not be disposed at the above probe or the like. Therefore, the sensor device 1 can accurately calculate the temperature of the fluid, and simplify the shape of the housing 2.

The temperature calculator 11 may substitute an average value of the values of the detected temperatures of the first temperature sensor 70 and an average value of the values of the detected temperatures of the second temperature sensor 80 into formulas 1 and 2 above without reference to the temperature calculation data 51, thereby calculating the detection temperature. To be specific, the temperature calculator 11 substitutes (an average value of) $T_2$ into formula 1, thereby finding $T_a$. Next, the temperature calculator 11 substitutes the found $T_a$ into formula 2, thereby calculating $T_L$. In this case, the sensor device 1 may not store the temperature calculation data 51 in the storage 50.

[Second embodiment]

The layout position of the first temperature sensor 70 is not limited to the layout position (the back side of the pressure detection element) represented in the first embodiment. Hereinafter, a second embodiment of the present disclosure will be described. A sensor device 1 according to the present embodiment is different from the sensor device 1 according to the above embodiment with regard to the layout of the first temperature sensor 70.

Fig. 7 is a graph illustrating the layout position of the first temperature sensor 70 and the values of $T_L$ and $T_1$. A broken line of the "back side of the element" indicates the value of $T_1$ when the first temperature sensor 70 is disposed on the back side of the pressure detection element as described in the first embodiment. The "inside of the fixing component" indicates the value of $T_1$ when the first temperature sensor 70 is disposed on an inner surface of the fixing component 7 of the connecting part 3. The "outside of the fixing component" indicates the value of $T_1$ when the first temperature sensor 70 is disposed on an outer surface of the fixing component 7. The "outer surface" mentioned here indicates a surface of the fixing component 7 which is in contact with the connecting part 3. The "inner surface" mentioned here indicates a surface of the fixing component 7 which is not in contact with the connecting part 3.

As illustrated, when the temperature of the fluid (the temperature of the detection target) is constant, the difference between the value of $T_L$ and the value of $T_1$ converges on a value determined by the layout position of the first temperature sensor 70. Here, the converging value has a fine difference according to the layout position of the first temperature sensor 70. The sensor device 1 changes the function of f() of formula 2 above depending on this fine difference, or performs mapping between $T_1$ and $T_L$ and between $T_2$ and $T_L$ in the temperature calculation data 51 of the storage 50. Thereby, regardless of whether the first temperature sensor 70 is disposed, for instance, inside or outside the fixing component 7, $T_L$ can be accurately calculated.

[Third embodiment]

The control block (particularly, the temperature calculator 11) of the controller 10 of the sensor device 1 may be realized by a logic circuit (hardware) formed in an integrated circuit (an IC chip) or the like, or by software using a central processing unit (CPU).

In the latter case, the controller 10 includes a CPU that executes a command of a program that is software for realizing each function, a read only memory (ROM) or a storage device (these are referred to as a "storage medium") in which the program or various data are readably recorded by a computer (or a CPU), a random access memory (RAM) that develops the program, and the like. The computer (or the CPU) executes the program by reading the program out of the recording medium, and thereby the object of the present invention is accomplished. As the recording medium, a "non-transient tangible medium," for instance, a tape, a disc, a card, a semiconductor memory, a programmable logic circuit, or the like may be used. The program may be supplied to the computer via an arbitrary transmission medium (a communication network, a carrier wave, etc.) that can transmit the program. An aspect of the present invention may also be realized by a form of a data signal, which is embedded in the carrier wave, and into which the program is embodied by electronic transmission.

The present invention is not limited to each of the above embodiments, and can be modified in various ways within the scope defined by the claims. Embodiments obtained by appropriately combining technical means disclosed in other embodiments are also included in the technical scope of the present invention.

[Modification]

The sensor device 1 may include a plurality of first temperature sensors 70. The sensor device 1 may include a plurality of second temperature sensors 80. When the sensor device includes one or more first temperature sensors 70 and one or more second temperature sensors 80, the temperature calculator 11 may for instance calculate an average value of detected temperatures of a group of first temperature sensors 70 and an average value of detected temperatures of a group of second temperature sensors 80, and specify the temperature of the detection target corresponding to a combination of the average values in the temperature calculation data 51. Alternatively, the temperature calculator 11 may perform adequate weighting of the detected temperatures of the plurality of first temperature sensors 70 and the plurality of second temperature sensors 80 depending on a layout position of each sensor. The temperature calculator may calculate the detected temperatures of the group of first temperature sensors 70 and the detected temperatures of the group of second temperature sensors 80, both of which are calculated by the weighting, and calculate a detection temperature using these temperatures.

The sensor device 1 may include a third temperature sensor for detecting a board temperature of the pressure sensor 60 independently of the first temperature sensor 70 and the second temperature sensor 80. To detect the board temperature of the pressure sensor 60, the third temperature sensor may be disposed in a place in which it is not contact with the detection target of the pressure sensor 60 and at a position different from that of the first temperature sensor 70.

[Reference Signs List]

1: sensor device
2: housing
3: connecting part
10: controller
11: temperature calculator
50: storage
60: pressure sensor
70: first temperature sensor
80: second temperature sensor
90: AD converter

**Claims**

1. A sensor device (1) with a pressure sensor (60) for detecting a pressure of a fluid, wherein the pressure sensor (60) is provided in a housing (2) of the sensor device (1) such that a pressure detection element is exposed to the fluid, the sensor device (1) comprising:

   a first temperature sensor (70) provided in the housing (2) and configured to detect a temperature conducted from the fluid via the housing (2) or the pressure sensor (60);
   **characterized in** a second temperature sensor (80) provided at a position that is more distant from the fluid than the first temperature sensor (70); and

a temperature calculator (11) configured to calculate a temperature of the detection target from a temperature detected by the first temperature sensor (70) and a temperature detected by the second temperature sensor (80), the sensor device (1) being wherein the second temperature sensor (80) is provided in contact with the housing (2) and inside a portion of the housing (2) which is not in contact with the fluid.

2.  The sensor device (1) according to claim 1, wherein the first temperature sensor (70) is disposed to contact with the pressure sensor (60) in the housing (2).

3.  The sensor device (1) according to claim 2, wherein the first temperature sensor (70) is disposed on a surface opposite to a detection surface of the pressure detection element.

4.  The sensor device (1) according to any one of claims 1 to 3, wherein:

    the housing (2) has a shape of a column or a prism, and a portion thereof including a bottom is in contact with the fluid, and
    the pressure sensor (60) is disposed such that the pressure detection element is exposed to the fluid from the bottom of the housing (2).

## Patentansprüche

1.  Sensorvorrichtung (1) mit einem Drucksensor (60) zum Erfassen eines Drucks eines Fluids, wobei der Drucksensor (60) in einem Gehäuse (2) der Sensorvorrichtung (1) derart vorgesehen ist, dass ein Druckerfassungselement dem Fluid exponiert ist, wobei die Sensorvorrichtung (1) umfasst:

    einen ersten Temperatursensor (70), der in dem Gehäuse (2) vorgesehen und konfiguriert ist, um eine Temperatur zu erfassen, die von dem Fluid über das Gehäuse (2) oder den Drucksensor (60) geleitet wird; **gekennzeichnet durch** einen zweiten Temperatursensor (80), der an einer Position vorgesehen ist, die weiter von dem Fluid entfernt ist als der erste Temperatursensor (70); und
    einen Temperaturberechner (11), der konfiguriert ist, um eine Temperatur des Erfassungsziels aus einer Temperatur, die vom ersten Temperatursensor (70) erfasst wurde und einer Temperatur, die vom zweiten Temperatursensor (80) erfasst wurde, zu berechnen, wobei der zweite Temperatursensor (80) in Kontakt mit dem Gehäuse (2) und in einem Abschnitt des Gehäuses (2), der nicht mit dem Fluid in Kontakt steht, vorgesehen ist.

2.  Sensorvorrichtung (1) gemäß Anspruch 1, wobei der erste Temperatursensor (70) so angeordnet ist, dass er mit dem Drucksensor (60) im Gehäuse (2) in Kontakt ist.

3.  Sensorvorrichtung (1) gemäß Anspruch 2, wobei der erste Temperatursensor (70) auf einer Oberfläche gegenüber einer Erfassungsfläche des Druckerfassungselements angeordnet ist.

4.  Sensorvorrichtung (1) gemäß irgendeinem der Ansprüche 1 bis 3, wobei:

    das Gehäuse (2) eine Form einer Säule oder eines Prismas aufweist und ein Abschnitt davon, der einen Boden beinhaltet, mit dem Fluid in Kontakt ist; und
    der Drucksensor (60) so angeordnet ist, dass das Druckerfassungselement dem Fluid vom Boden des Gehäuses (2) exponiert ist.

## Revendications

1.  Dispositif de capteur (1) comportant un capteur de pression (60) pour la détection d'une pression d'un fluide,
    le détecteur de pression (60) étant prévu dans un boîtier (2) du dispositif de capteur (1) de sorte qu'un élément de détection de pression soit exposé au fluide, le dispositif de capteur (1) comprenant :

    un premier capteur de température (70) prévu dans le boîtier (2) et configuré pour détecter une température conduite depuis le fluide via le boîtier (2) ou le capteur de pression (60) ;
    **caractérisé par**
    un second capteur de température (80) prévu à une position qui est plus distante du fluide que le premier capteur de température (70) ; et
    un calculateur de température (11) configuré pour calculer une température de la cible de détection à partir d'une température détectée par le premier capteur de température (70) et d'une température détectée par le second capteur de température (80), le dispositif de capteur (1) étant **caractérisé en ce que** le second capteur de température (80) est prévu en contact avec le boîtier (2) et dans une partie du boîtier (2) qui n'est pas en contact avec le fluide.

2.  Dispositif de capteur (1) selon la revendication 1, dans lequel le premier capteur de température (70) est disposé de manière à être en contact avec le capteur de pression (60) dans le boîtier (2).

**3.** Dispositif de capteur (1) selon la revendication 2, dans lequel le premier capteur de température (70) est disposé sur une surface opposée à une surface de détection de l'élément de détection de pression.

**4.** Dispositif de capteur (1) selon l'une quelconque des revendications 1 à 3, dans lequel :

le boîtier (2) a la forme d'une colonne ou d'un prisme et une section de celui-ci incluant un fond est en contact avec le fluide, et
le capteur de pression (60) est disposé de manière à ce que l'élément de détection de pression soit exposé au fluide depuis le fond du boîtier (2).

1:SENSOR DEVICE

FIG. 1

1

2 : HOUSING

5 : BUTTON

4 : DISPLAY

Z

Y

X

6 : WIRING
MOUNTING
PART

3 : CONNECTING PART

# FIG. 2

(a)

(b)

(c)

(d)

# FIG. 3

FIG. 4

FIG. 5

```
                    ┌─────────────┐
                    │    START    │
                    └──────┬──────┘
                           │                    ┌ S1
              ┌────────────┴────────────┐
              │   ACQUIRE T₁ AND T₂     │
              └────────────┬────────────┘
                           │                    ┌ S2
              ┌────────────┴────────────┐
              │  CALCULATE AVERAGE VALUE │
              └────────────┬────────────┘
                           │                    ┌ S3
              ┌────────────┴────────────────────┐
              │ SPECIFY T_L WITH REFERENCE TO    │
              │ TEMPERATURE CALCULATION DATA     │
              └────────────┬────────────────────┘
                           │                    ┌ S4
              ┌────────────┴────────────┐
              │        OUTPUT T_L       │
              └────────────┬────────────┘
                           │
                    ┌──────┴──────┐
                    │     END     │
                    └─────────────┘
```

# FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011033531 A
- JP 2009281915 A
- JP 2011202960 A
- JP 2014122811 A
- US 2002189363 A1
- WO 2015099933 A1
- DE 102004053884 A1